# EUROPEAN PATENT SPECIFICATION

(11) **EP 0 955 246 B1**
(45) Date of publication and mention of the grant of the patent: **02.01.2003**
(21) Application number: 99200763.3
(22) Date of filing: 13.03.1999
(51) Int. Cl.: B65D 81/34, A23L 1/48

(54) **Pouch meal**
Speise im Beutel
Repas en sachet

(30) Priority: 08.05.1998 GB 9809919
(43) Date of publication of application: 10.11.1999
(73) Proprietor: SOCIETE DES PRODUITS NESTLE S.A., 1800 Vevey (CH)
(72) Inventor: Nilsson, Göran, 26243 Angelholm (SE); Sjöberg, Elisabeth, 22731 Lund (SE)
(74) Representative: Vuille, Roman

(56) References cited:
- EP-A- 0 198 362
- EP-A- 0 531 176
- FR-A- 2 483 190
- PATENT ABSTRACTS OF JAPAN vol. 008, no. 102 (C-222), 12 May 1984 (1984-05-12) & JP 59 017970 A (NICHIRO GIYOGIYOU KK), 30 January 1984 (1984-01-30)
- PATENT ABSTRACTS OF JAPAN vol. 011, no. 008 (C-396), 9 January 1987 (1987-01-09) & JP 61 187760 A (KODOMO NO MORI:KK;OTHERS: 01), 21 August 1986 (1986-08-21)
- PATENT ABSTRACTS OF JAPAN vol. 1997, no. 09, 30 September 1997 (1997-09-30) & JP 09 124005 A (SHINKO ELECTRIC CO LTD), 13 May 1997 (1997-05-13)
- PATENT ABSTRACTS OF JAPAN vol. 1998, no. 06, 30 April 1998 (1998-04-30) & JP 10 042800 A (AJINOMOTO CO INC;ACE PACKAGE:KK), 17 February 1998 (1998-02-17)

## Description

The present invention relates to a frozen food product in a steamable pouch. The invention also relates to a method of preparing the frozen food product.

It is known to boil rice or pasta in net pouches. The pouch with the rice or pasta is immersed into boiling water and after the end of the cooking time the pouch is lifted out of the water. The pouch then acts as its own colander by self-draining the water from the rice or pasta.

This kind of pouch is not used for other types of food because cooking a food product such as vegetables or fish directly in water can result in loss of vitamins and colour, uptake of water resulting in a change in structure of the product and the taste.

It is also known to prepare meals in a boil-in-bag. However, for such meals the pouch is a closed pouch preventing contact between the food product and the water and the possible loss of vitamins and colour, uptake of water resulting in a change in structure of the product and the taste. Furthermore, boil-in-bag meals are often prepared cooked dishes in sauce that makes them unsuitable for being put directly into water without any protective package.

Preparing food products in a pouch is generally desirable as the food product can be hygienically handled without direct contact with the product and because the preparing normally reduces cleaning of cooking utensils.

The invention aims to provide a high quality hot meal preserving vitamins, flavour, colour, taste of the ingredients. A further aim is that such a meal can be prepared in a hygienic and convenient manner which and which requires as little as possible involvement by the consumer during its preparation. The invention also aims to provide a meal which is suitable for catering or restaurant outlets.

Accordingly, in a first aspect, the invention relates to a frozen food product in a steamable pack comprising
(i) frozen food pieces containing at least two different types of food, and
(ii) a pouch containing the frozen food pieces, the pouch comprising a mesh, the mesh allowing steam to escape during heating but maintaining a steam environment in the pouch.

It has been found that by heating the pouch in a microwave oven, although the pouch comprises a mesh or is made up by a mesh, it is possible to generate a steam environment in the pouch even though steam is allowed to escape. It has also been found that steam which condenses on the inside of the package and that moisture generated from the heating of the food pieces are retained in the pouch. When heating the frozen product in the pouch in the microwave oven, the food pieces are steamed and a crispy product may be obtained which has a high level of vitamin and a well-preserved colour.

The quality of the product which can be obtained when heating the pouch product according to the invention is different from the quality obtained had the product been prepared in a roasting bag in a microwave oven. A roasting bag is an impervious bag which normally is give a few perforations to prevent it from exploding when the product is heated. The roasting bag provides a pressure cooking and braising of the product. The tast of the product prepared in a roasting bag is therefore different due to the cooking, boiling and braising of the ingredients together. The product heated in a mesh pouch will be steamed not boiled in a moist environment.

The frozen food product comprises at least two types of frozen food pieces such as individually frozen pieces. As the frozen product can comprise a number of different food pieces a complete meal can be composed.

It has surprisingly been found that a meal with a sauce or liquid seasoning may also be prepared in a mesh pouch in accordance with the invention. The frozen food pieces and sauce or liquid seasoning may be packed together in the pouch of the invention. When heating the pouch in a microwave oven, it has been found that the sauce or liquid seasoning will substantially remain in the pouch. The pouch mesh of the invention may retain liquid having a viscosity in the range from 1 to 20 Bostwick Centigrades (test conditions: 50 ml sauce or liquid seasoning, 20°C, 30 sec flow time). Preferred mesh materials for this purpose are given below.

The food pieces may be coated with the sauce or liquid seasoning. It may e.g. be sprayed onto the food pieces.. Alternatively, the sauce or liquid seasoning may be included in the pouch in the form of frozen pellets.

It has been found that by utilising a mesh material having 80 to 100 holes per cm2 the above discussed steaming of the food pieces may be obtained and sauce or liquid seasoning retained in the pouch. It is preferred that the mesh has a hole size of less than 500 micron. Particularly advantageously the hole size is from 425 to 475 micron. A perferred hole size is 450 micron. The pouch may be partly made from the mesh or the mesh may be used for the whole pouch.

Suitable materials for the mesh are a material, which is substantially transparent to microwave, and which can withstand heating of the product. The mesh is preferably of plastics such as polyethylene, polypropylene, or polyester etc.. More preferably, the mesh is of HDPE (high-density polyethylene). The mesh advantageously has a thickness of below 200 micron, more preferably below 100 micron.

The food pieces may be selected from the group consisting of individually frozen predominantly carbohydrate ingredients, individually frozen predominantly vegetable ingredients, and individually frozen predominantly meat based ingredients or a combination thereof.

In the present context, the group of individually frozen predominantly meat based ingredients comprise e.g. meat, poultry, fish meat, seafood or other types of meat. The size of the ingredients ranges from 1 to 50 grams, preferably from 1 to 20 grams. The size of the ingredients determine the preparation time required. Therefore, it is desirable to have smaller pieces.

The group of individually frozen predominantly carbohydrate ingredients preferably comprises ingredients such as rice, pasta, potato etc.

The group of individually frozen predominantly vegetable ingredient preferably comprises carrot, peas, peppers, beans, wheat corns. Conveniently, the vegetables are blanched, for example to increase the food safety.

The food pieces may be whole or cut into smaller portions. For example, the meal may comprise whole potatoes.

The ingredients may be pre-cooked or edible upon thawing. For ingredients, which require little cooking, such as fish meat or seafood, it may not be necessary to pre-cook.

The invention has been shown particularly useful for the preparation of meals of fish or seafood. For example fish and/or seafood and vegetables have been successfully prepared. The meal may be prepared with or without sauce or liquid seasoning.

In the present context a liquid seasoning is e.g. a liquid medium comprising seasoning and fat. For example, the liquid seasoning comprises water, herbs or spices, starch and oil.
In the present context a sauce is e.g. selected from the group consisting of cheese sauce and béchamel sauce with or without milk, tomato sauce and vegetable sauce, or a combination thereof. The sauce may or may not comprise pieces of meat, fish or vegetables etc. Other sauces are sauces based on meat or fish stock or gravy.

The sauce or liquid seasoning preferable has a viscosity of from 1 to 20 Bostwick Centigrades (test conditions, 50 ml sauce or liquid seasoning, 20°C, 30 sec flow time).

The sauce or liquid seasoning has a water content from 75 to 98% by weight, preferably from 75 to 95 %, advantageously about 90 % wt. It is preferred that the sauce constitutes from 5 to 15% of the total weight of the meal.

If the sauce or liquid seasoning is in pellet form, the pellets are preferably being from 1 to 10 grams.

The fact that the ingredients are individually frozen makes it possible to make an on-line variation of the composition of the meal.

In another aspect, the invention relates to a method of preparing a frozen food product in a steamable pack as discussed above wherein the steamable package is heated in a microwave oven.

In a further aspect, the invention relates to a method of preparing a frozen food product in a steamable pack as discussed above wherein the steamable pack is heated in a steam cooker. This method of preparing may have the advantage over introducing the meal in a conventional steam cooker. Whereas in a conventional steam cooker all steam and moisture which results form the heating of the product will evaporate or drip from the product, when the product is heated in accordance with the invention moisture from the product and any sauce which may have been applied to it is retained in the pouch while steam is allowed to escape through the mesh. Furthermore, sauce or liquid seasoning may be used.

The considerations regarding preferred composition of the meal discussed above, is also applicable to the method of the invention. Preferred preparation conditions will be discussed in the examples.

The invention will now be described in further details with reference to the drawings and examples, by example only, in which,
Fig. 1 shows a photo of a frozen meal in a pouch with a mesh in accordance with the invention, and
Fig. 2 shows a photo of a meal of Fig. 1 prepared.

The meals are prepared from the following :

| | |
|---|---|
| Mixed vegetables | 100- 325 g |
| Shrimps - Chicken - Fish | 35 - 100 g |
| Pasta - Rice | 50 - 150 g |
| spice liquid | 10 - 35 g |
| Total weight about | 350 g |

| Liquid seasoning: | |
|---|---|
| vegetable oil | 0- 15 g |
| boullion/stock | 5- 15 g |
| modified starch | 2 - 4 g |
| water | 15- 20 g |
| salt, herbs and spices | 1 - 3 g |
| Total weight | 10 - 35 g |

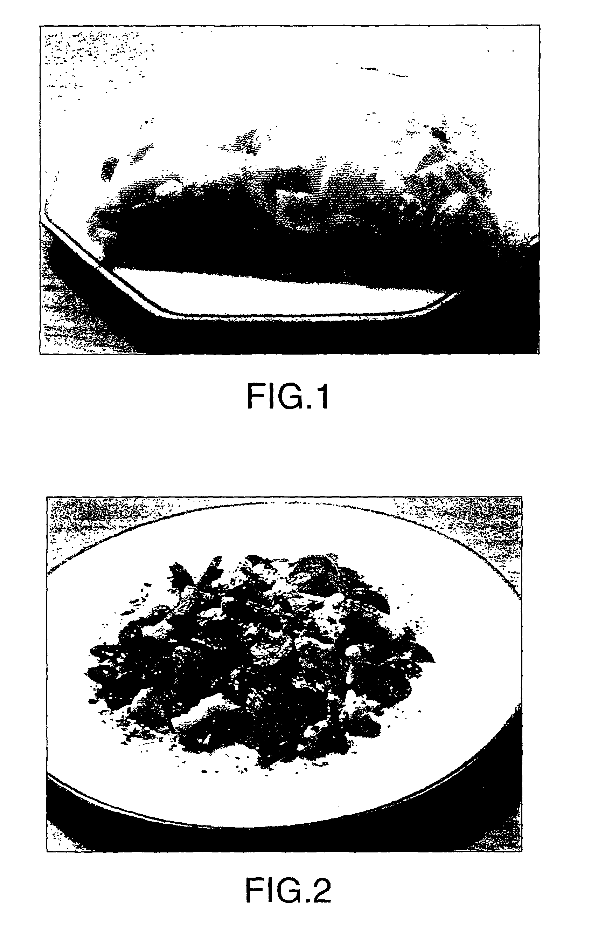

A frozen meal made of food pieces as indicated above is shown in Figure 1.

Cooking tests are performed in a Microwave oven (700W). A desirable minimum temperature of the meal ingredients is about 75 °C. The meals are heated until the coldest spot reaches this temperature.

The pouch is placed in the Microwave oven and heating for 4 to 5 minutes. The pouch is inspected through a window in the microwave oven and steam escape from the pouch through the mesh while the cooking takes place. A slight lifting of the pouch material takes place but it is not blown up. The pouch is removed from the microwave oven and the content arrange on a plate, see Figure 2. The product is evaluated and the ingredients found fresh in colour having a pleasant crisp texture and a complete dish giving an impression of freshness and healthy eating. An amount of juice or sauce occur all depending of amount of added spice liquid.

The pouch prevents the products from dehydration and sauce or liquid seasoning or juice from the product evaporation during reconstitution in Microwave oven.

## Claims

1. A frozen food product in a steamable pack comprising
(i) frozen food pieces containing at least two different types of food, and
(ii) a pouch containing the frozen food pieces, the pouch comprising a mesh, the mesh allowing steam to escape during heating but maintaining a steam environment in the pouch.

2. A frozen food product according to claim 1, wherein the mesh retains liquid having a viscosity of in the range from 1 to 20 Bostwick Centigrades.

3. A frozen product according to either claim 1 or 2, wherein the pouch comprises frozen pellets of sauce or liquid seasoning.

4. A frozen product according to either claim 1 or 2, wherein the food pieces are coated in sauce or liquid seasoning.

5. A frozen product according to either of claim 1 or 4, wherein the mesh has 80 to 100 holes per cm2.

6. A frozen product according to any of claims 1 to 5, wherein the mesh has a hole size of less than 500 micron.

7. A frozen product according to any of claims 1 to 6, wherein the hole size is from 425 to 475 micron.

8. A frozen product according to any of claims 1 to 7, wherein the pouch is made of the mesh.

9. A frozen product according to any of claims 1 to 8, wherein the types of food are selected from the group consisting of individually frozen predominantly carbohydrate ingredients, individually frozen predominantly vegetable ingredients, and individually frozen predominantly meat based ingredients or a combination thereof.

10. A frozen product according to any of claims 1 to 9, wherein the food pieces comprises fish and/or seafood and vegetables.

11. A method of preparing a frozen food product according to any of the proceeding claims, wherein the steamable package is heated in a microwave oven.

12. A method of preparing a frozen food product according to any of the proceeding claims, wherein the steamable package is heated in a steam cooker.

## Patentansprüche

1. Gefrorenes Lebensmittelprodukt in einer dämpfbaren Packung mit
(i) gefrorenen Lebensmittelstücken, die zumindest zwei unterschiedliche Arten von Lebensmitteln enthalten, und
(ii) einem Beutel, der die gefrorenen Lebensmittelstücke enthält, wobei der Beutel ein Gitter umfaßt, wobei es das Gitter zuläßt, daß Dampf während des Erwärmens entweicht, aber eine Dampfumgebung in dem Beutel aufrechterhält.

2. Gefrorenes Lebensmittelprodukt nach Anspruch 1, bei dem das Gitter Flüssigkeit mit einer Viskosität in dem Bereich zwischen 1 bis 20 Bostwick Centigrad zurückhält.

3. Gefrorenes Produkt nach Anspruch 1 oder 2, bei dem der Beutel gefrorene Tabletten aus Soße oder würziger Flüssigkeit umfaßt.

4. Gefrorenes Produkt nach Anspruch 1 oder 2, bei dem die Lebensmittelstücke mit Soße oder würziger Flüssigkeit beschichtet sind.

5. Gefrorenes Produkt nach Anspruch 1 oder 4, bei dem das Gitter 80 bis 100 Löcher pro cm² aufweist.

6. Gefrorenes Produkt nach einem der Ansprüche 1 bis 5, bei dem das Gitter eine Lochgröße von weniger als 500 Mikrometer aufweist.

7. Gefrorenes Produkt nach einem der Ansprüche 1 bis 6, bei dem die Lochgröße zwischen 425 bis 475 Mikrometern liegt.

8. Gefrorenes Produkt nach einem der Ansprüche 1 bis 7, bei dem der Beutel aus dem Gitter gemacht ist.

9. Gefrorenes Produkt nach einem der Ansprüche 1 bis 8, bei dem die Lebensmittelarten aus der Gruppe ausgewählt sind, die aus einzeln gefrorenen Zutaten mit überwiegend Kohlenhydraten, einzeln gefrorenen Zutaten mit überwiegend Gemüse, und einzeln gefrorenen Zutaten überwiegend auf Fleischbasis oder einer Kombination davon besteht.

10. Gefrorenes Produkt nach einem der Ansprüche 1 bis 9, bei dem die Lebensmittelstücke Fisch und/oder Meeresfrüchte und Gemüse umfassen.

11. Verfahren zum Zubereiten eines gefrorenen Lebensmittelprodukts nach einem der vorhergehenden Ansprüche, bei dem die dämpfbare Verpackung in einem Mikrowellenherd erwärmt wird.

12. Verfahren zum Zubereiten eines gefrorenen Lebensmittelprodukts nach einem der vorhergehenden Ansprüche, bei dem die dämpfbare Verpackung in einem Dampfkochgerät erwärmt wird.

## Revendications

1. Produit alimentaire congelé dans un emballage apte à la cuisson à la vapeur, comprenant :
(i) des morceaux d'aliments congelés contenant au moins deux types différents d'aliments, et
(ii) un sachet contenant les morceaux d'aliments congelés, le sachet comprenant des mailles, les mailles permettant à la vapeur d'eau de s'échapper au cours du chauffage mais maintenant un environnement de vapeur d'eau dans le sachet.

2. Produit alimentaire congelé suivant la revendication 1, dans lequel les mailles retiennent un liquide ayant une viscosité comprise dans l'intervalle de 1 à 20 centigrades Bostwick.

3. Produit congelé suivant la revendication 1 ou 2, dans lequel le sachet comprend des granulés congelés de sauce ou d'assaisonnement liquide.

4. Produit congelé suivant la revendication 1 ou 2, dans lequel les morceaux d'aliments sont enrobés dans une sauce ou un assaisonnement liquide.

5. Produit congelé suivant la revendication 1 ou 4, dans lequel les mailles comportent 80 à 100 trous par cm².

6. Produit congelé suivant l'une quelconque des revendications 1 à 5, dans lequel les mailles ont un diamètre de trou inférieur à 500 micromètres.

7. Produit congelé suivant l'une quelconque des revendications 1 à 6, dans lequel le diamètre de trou est compris dans l'intervalle de 425 à 475 micromètres.

8. Produit congelé suivant l'une quelconque des revendications 1 à 7, dans lequel le sachet est constitué des mailles.

9. Produit congelé suivant l'une quelconque des revendications 1 à 8, dans lequel les types d'aliments sont choisis dans le groupe consistant en des ingrédients principalement glucidiques congelés individuellement, des ingrédients consistant principalement en légumes congélés individuellement et des ingrédients principalement à base de viande congelés individuellement ou une de leurs associations.

10. Produit congelé suivant l'une quelconque des revendications 1 à 9, dans lequel les morceaux d'aliments comprennent le poisson et/ou des crustacés et des légumes.

11. Procédé pour la préparation d'un produit alimentaire congelé suivant l'une quelconque des revendications précédentes, dans lequel l'emballage apte à la cuisson à la vapeur est chauffé dans un four à micro-ondes.

12. Procédé pour la préparation d'un produit alimentaire congelé suivant l'une quelconque des revendications précédentes, dans lequel l'emballage apte à la cuisson à la vapeur est chauffé dans un cuiseur à vapeur.
